Europäisches Patentamt

European Patent Office

Office européen des brevets

(19)

(11) Veröffentlichungsnummer: **0 380 670**
**A1**

(12) **EUROPÄISCHE PATENTANMELDUNG**
veröffentlicht nach Art. 158 Abs. 3
EPÜ

(21) Anmeldenummer: 88909238.3

(22) Anmeldetag: 26.07.88

(86) Internationale Anmeldenummer:
PCT/SU88/00151

(87) Internationale Veröffentlichungsnummer:
WO 90/00989 (08.02.90 90/04)

(51) Int. Cl.⁵: **B60N 1/06, B60N 1/08**

(43) Veröffentlichungstag der Anmeldung:
08.08.90 Patentblatt 90/32

(84) Benannte Vertragsstaaten:
**DE FR GB IT SE**

(71) Anmelder:
NAUCHNO-PROIDSVODSTEVENNOE
OBIEDINENIE PO TRAKTOROSTROENIJU
ul. Verkhnaya 34
Moscow, 125040(SU)

(72) Erfinder: TISCHENKO, Vladimir Fedorovich
ul. Krivorozhskaya, 70-111
Dnepropetrovsk, 320035(SU)
Erfinder: BAKHANOV, Anatoly Afanasievich
ul. Stroitelei, 22-34
Dnepropetrovsk, 320089(SU)
Erfinder: ZAYATS, Yakov Izrailevich
ul. Palikha, 7/9-2-8
Moscow, 103055(SU)
Erfinder: GLUZMAN, Ilya Alexandrovich
ul. Belomorskaya, 20-6
Moscow, 125195(SU)
Erfinder: REBROV, Andrei Viktorovich
Leningradsky pr., 66-131
Moscow, 125315(SU)
Erfinder: LATJUK, Valentin Gerasimovich
Moldovanovka ul. Pionerskaya, 18-4
Alamedinsky
raion Kirgizskaya SSR, 722179(SU)

(74) Vertreter: Patentanwälte Zellentin & Partner
Zweibrückenstrasse 15
D-8000 München 2(DE)

(54) FAHRZEUGSESSELSTAND-ANPASSEINHEIT.

(57) Die Sitzverstellungseinheit eines Fahrzeuges enthält zwei parallel liegende, miteinander gelenkig verbundene Paare von Hebeln (3, 4, und 5, 6), wobei die ersten Enden (7, 8, 9, 10) eines jeden Hebelpaares mit einem ersten Rahmen (1) verbunden sind, an dem eine mit dem ersten Hebel (3) eines der Hebel-

EP 0 380 670 A1

paare kinematisch verbundene Vorrichtung (62) zur Verstellung des Sitzes in Längsrichtung angebracht ist, und die zweiten Enden (11, 12, 13, 14) mit einem zweiten Rahmen (2) verbunden sind, an dem eine Vorrichtung (15) zur Höhenverstellung des Sitzes angebracht ist, die über eine kinematische Bindung mit dem ersten Hebel (3) des ersten Hebelpaares verbunden ist. Da bei sind entweder die Hebelpaare (3, 4 und 5, 6) miteinander starr verbunden, oder am zweiten Rahmen (2) ist eine zweite Vorrichtung (16) zur Höhenverstellung des Sitzes angebracht, die über eine kinematische Bindung mit dem ersten Hebel (5) des zweiten Hebelpaares verbunden ist.

FIG.2

2

# SITZVERSTELLUNGSEINHEIT EINES FAHRZEUGES

## Gebiet der Technik

Die vorliegende Erfindung bezieht sich auf den Maschinenbau und betrifft eine Sitzverstellungseinheit eines Fahrzeuges.

Gegenwärtig besteht das Problem einer Verbesserung der Arbeitsverhältnisse für Fahrzeugführer. Zur Erhöhung des Komforts und der Erleichterung der Arbeit des Fahrzeugführers sind Sitze mit verschiedenen Sitzverstellungsvorrichtungen angewendet.

## Stand der Technik

Es ist eine Sitzverstellungseinheit eines Fahrzeuges bekannt, die einen ersten Rahmen enthält, der mittels zweier Hebelpaare mit einem zweiten Rahmen verbunden ist, an dem eine Vorrichtung zur Verstellung des Sitzes nach Höhe und Neigungswinkel angebracht ist (SU-A-831642). Das eine Ende des ersten Hebels eines jeden Paares ist mit der Mitte des zweiten Hebels gelenkig verbunden, während das andere Ende desselben mit dem zweiten Rahmen gelenkig verbunden ist. Der zweite Hebel eines jeden Paares ist an seinem einen Ende mit dem ersten Rahmen gelenkig verbunden, während er an seinem anderen Ende mittels einer kinematischen Bindung mit dem zweiten Rahmen verbunden ist. Diese kinematische Bindung erfolgt mittels eines Zapfens, der am Ende des zweiten Hebels in einem im zweiten Rahmen ausgeführten Schlitz verschiebbar angebracht ist, wobei der Zapfen relativ zu dem zweiten Rahmen abgefedert ist.

Die Vorrichtung zur Verstellung des Sitzes nach Höhe und Neigungswinkel ist als eine Querwelle mit einem an deren Ende vorhandenen Handgriff ausgeführt. Auf der erwähnten Welle sind halbrunde Abflachungen vorgesehen, die mit Fixierzapfen zusammenwirken, welche an den Enden der zweiten, mit dem zweiten Rahmen kinematisch zusammenwirkenden Hebel befestigt sind.

Zur Verstellung des Sitzes nach Höhe bzw. Neigungswinkel dreht man die Welle mit Hilfe des genannten Handgriffes. Dabei treten die Fixierzapfen aus den Abflachungen der Welle aus, und die Federn heben den Sitz über

- 2 -

die an den zweiten Hebeln vorhandenen Zapfen in die obere Stellung. Nach der erwünschten Verstellung bringt man die Welle in die Ausgangsstellung zurück, wobei die Zapfen in den Abflachungen festgestellt werden.

Diese Sitzverstellungseinheit gestattet es, einen Sitz nach Höhe und Neigungswinkel zu verstellen. Jedoch ist bei/dieser Einheit die Feststellung der Welle beim Verstellen nicht vorgesehen, was eine Sitzverstellung während der Bewegung des Fahrzeuges unmöglich macht. Da die Sitzstellung bei gedrehter Welle nicht festgestellt werden kann, wird eine Regulierung zum Erreichen einer bestimmten Stellung erschwert. Beim Betrieb können die Wellenabflachungen zerschlagen werden, was zur Selbstverstellung führen kann. Da keine Vorrichtung zur Sitzverstellung in Längsrichtung in einem Block mit der erwähnten Vorrichtung zur Verstellung des Sitzes nach Höhe und Neigungswinkel vorgesehen ist, kann diese Vorrichtung als eine autonome Verstellungseinheit nicht verwendet werden.

Es ist ferner eine Sitzverstellungseinheit eines Fahrzeuges bekannt, die einen ersten Rahmen, der mit einem zweiten Rahmen mittels eines Zwischenrahmens verbunden ist, sowie zwei Vorrichtungen zur Verstellung des Sitzes nach Höhe und Neigungswinkel, die mit dem zweiten Rahmen zusammenwirken,(SU - A - 1044490). Die eine Seite enthält des Zwischenrahmens ist mit dem ersten Rahmen und die gegenüberliegende Seite mit dem zweiten Rahmen gelenkig verbunden.

Die Vorrichtungen zur Verstellung des Sitzes nach Höhe und Neigungswinkel sind als Kurbelwellen ausgeführt, die am ersten Rahmen gelenkig befestigt und relativ zu diesem abgefedert sind. An jeder Kurbelwelle ist eine Klinke starr befestigt, die in einen an dem jeweiligen Ständer des zweiten Rahmens ausgeführten, in der Vertikalen liegenden Ausschnitt eintritt.

Die Verstellung des Sitzes nach Höhe und Neigungswinkel geschieht durch Drehen jeweils zweier bzw. einer Kurbelwelle. Dabei tritt die Klinke aus dem Ausschnitt

- 3 -

aus. Danach hebt der Fahrzeugführer den entsprechenden Teil des Sitzes auf die erwünschte Höhe und stellt den Sitz in der eingestellten Lage fest, indem er die Kurbelwelle absenkt.

Da die für die Sitzverstellung notwendigen Handhabungen vom Fahrer mit der einen oder im Wechsel mit der zweiten Hand vorgenommen werden können, wird die Möglichkeit einer Sitzverstellung während der Bewegung des Transportmittels gewährleistet. Dies erhöht die Arbeitsproduktivität des Fahrzeugführers. Jedoch fällt es mit der erwähnten Verstellungseinheit recht schwer, die Einstellung des Sitzes in einerbestimmten Lage wegen der schwierigen Fixierung der Klinke im erforderlichen Ausschnitt, insbesondere während der Bewegung des Fahrzeuges vorzunehmen. Da es eine Vorrichtung zur Verstellung des Sitzes in Längsrichtung in einem Block mit den genannten Vorrichtungen nicht gibt, kann diese Einheit/als nicht autonome Verstellungseinheit verwendet werden. Darüber hinaus ist die Konstruktion der beschriebenen Verstellungseinheit kompliziert in der Herstellung.

Es ist eine Sitzverstellungseinheit eines Fahrzeuges bekannt, die miteinander paarweise gelenkig verbundene Hebel, bei der die ersten Enden jedes Paares mit einem ersten Rahmen und die zweiten Enden mit einem zweiten Rahmen verbunden sind, an dem eine Vorrichtung zur Höhenverstellung des Sitzes angebracht ist, sowie eine Vorrichtung zur Verstellung des Sitzes in Längsrichtung enthält (FR - B - 2002697). Die Vorrichtung zur Höhenverstellung des Sitzes ist in Gestalt eines am zweiten Rahmen befestigten Hohlzylinders mit einem Innengewinde ausgebildet, in den eine Schraube eingedreht wird, die mit ihrem Ende am ersten Rahmen beweglich angebracht ist. Die Drehung der Schraube geschieht mittels eines Handgriffes über ein Schneckengetriebe.

Die Vorrichtung zur Verstellung des Sitzes in Längsrichtung enthält profilierte, sich ineinander bewegende Führungen, wobei die beweglichen Führungen am zweiten Rahmen und die unbeweglichen Führungen an der Sitzaufhängung befestigt sind, eine gelenkig auf dem zweiten Rahmen angebrachte, abgefederte Zahnstange und einen entsprechenden Feststeller mit mehreren Zähnen, der an einer der unbeweglichen Führungen starr angebracht ist.

Die Verstellung des Sitzes in der Höhe geschieht mittels des Handgriffes durch Drehen der Schraube, die sich aus dem feststehenden Zylinder herausbewegt.

Zur Verstellung des Sitzes in Längsrichtung dreht man die genannte Zahnstange. Diese tritt aus dem Eingriff mit dem Feststeller aus, der Sitz wird verstellt, indem man ihn über die Führungen bewegt, und durch Zurückführung der Zahnstange in den Eingriff wieder festgestellt.

Die beschriebene Einheit enthält in einem Block ausgeführte Vorrichtungen zur Festellung des Sitzes in der Höhe bzw. in Längsrichtung . Jedoch ist es wegen der über die Abmessungen des Zylinderblocks hinaus nach unten vorstehenden Sitzhöhenverstellungsvorrichtung recht schwer, diese als autonome Verstellungseinheit anzuwenden. Eine Vielzahl von Gelenken, beweglichen Teilen, Führungen macht die Konstruktion kompliziert und schwierig in der Fertigung, stellt höhere Anforderungen an die Herstellungsgenauigkeit und steigert die Wahrscheinlichkeit von Schrägstellungen, Festklemmungen u. ä. Das Verstellen des Sitzes in der Höhe ist schwierig und erfordert viel Zeit. Außerdem ist in der beschriebenen Konstruktion die Möglichkeit einer Verstellung des Sitzes nach dem Neigungswinkel in der Querebene nicht vorgesehen.

Der vorliegenden Erfindung liegt die Aufgabe zugrunde, eine Sitzverstellungseinheit eines Fahrzeuges mit einer solchen Ausführung kinematischer Bindungen zu schaffen, die bei gleichzeitiger Vereinfachung der Konstruktion und Steigerung der Zuverlässigkeit eine autonome Verstellung des Sitzes in der Höhe, in Längsrichtung sowie bei Bedarf in der Neigungswinkelebene gewährleistet.

Die gestellte Aufgabe ist dadurch gelöst, daß in einer Sitzverstellungseinheit eines Fahrzeuges, die miteinander paarweise gelenkig verbundene Hebel, bei denen die ersten Enden jedes Paares mit einem ersten Rahmen und die zweiten

- 5 -

Enden mit einem zweiten Rahmen verbunden sind, an dem eine Vorrichtung zur Höhenverstellung des Sitzes angebracht ist, sowie eine Vorrichtung zur Verstellung des Sitzes in Längsrichtung enthält, erfindungsgemäß die Hebelpaare parallel liegen, und am zweiten Rahmen eine zweite Vorrichtung zur Höhenverstellung des Sitzes angebracht ist, wobei die erste Vorrichtung zur Höhenverstellung des Sitzes über eine kinematische Bindung mit dem ersten Hebel des ersten Hebelpaares, die zweite Vorrichtung zur Höhenverstellung des Sitzes über eine kinematische Bindung mit dem ersten Hebel des zweiten Hebelpaares und die Vorrichtung zur Verstellung des Sitzes in Längsrichtung am ersten Rahmen angebracht und über eine kinematische Bindung mit dem ersten Hebel eines der Hebelpaare verbunden ist.

Diese technische Lösung ist hauptsächlich für die Sitze von Traktoren, Selbstfahrlandmaschinen, Straßenbaumaschinen und andere Transportmittel vorgesehen, die vorwiegend auf Abhängen zum Einsatz gelangen, z. B. von zum Pflügen des Bodens eingesetzten Traktoren. In dieser Lösung dienen die Vorrichtungen zur Höhenverstellung des Sitzes gleichzeitig auch zur Verstellung des Sitzes nach dem Neigungswinkel.

Die gestellte Aufgabe ist dadurch gelöst, daß in einer Sitzverstellungseinheit eines Fahrzeuges, die miteinander paarweise gelenkig verbundene Hebel, bei denen die ersten Enden jedes Paares mit dem ersten Rahmen, und die zweiten Enden mit dem zweiten Rahmen verbunden sind, an dem eine Vorrichtung zur Höhenverstellung des Sitzes angebracht ist, sowie eine Vorrichtung zur Verstellung des Sitzes in Längsrichtung enthält, erfindungsgemäß die Hebelpaare parallel liegen und miteinander starr verbunden sind, und die Vorrichtung zur Höhenverstellung des Sitzes über eine kinematische Bindung mit dem ersten Hebel des ersten Paares verbunden ist, mit dem über eine andere kinematische Bindung die am ersten Rahmen angebrachte Vorrichtung zur Verstellung des Sitzes in Längsrichtung verbunden ist.

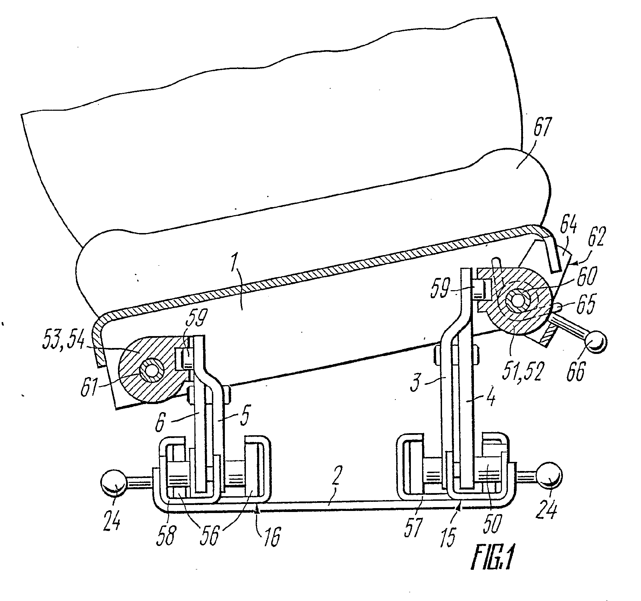

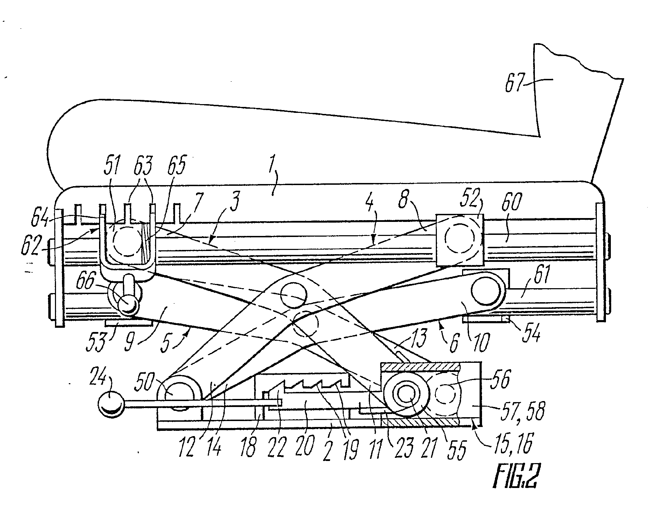

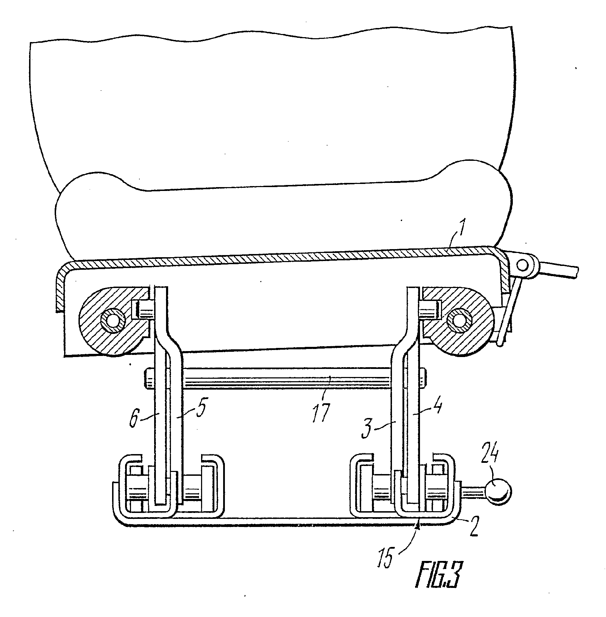

das erste Paar der Hebel 3, 4 (Fig.3) mit dem zweiten Paar der Hebel 5, 6 mittels einer gemeinsamen Achse 17 starr verbunden.

Die Vorrichtungen 15, 16 zur Höhenverstellung des Sitzes können verschiedene konstruktive Ausführungen haben.

In dem Fall, wenn die erfindungsgemäße Sitzverstellungseinheit in Transportmitteln mit geringer Vibrationsstärke am Fahrersitz, beispielsweise in Lastkraftwagen, Autobussen, langsam fahrenden und anderen ähnlichen Fahrzeugen angewendet wird, stellt jede Vorrichtung 15, 16 zur Höhenverstellung des Sitzes eine Zahnstange 18 (Fig. 2) mit abgeschrägten Zähnen 19 dar und wird am zweiten Rahmen 2 angebracht. Die kinematische Bindung jeder Vorrichtung 15, 16 zur Höhenverstellung des Sitzes wird mittels einer Klinke 20 hergestellt. Das eine Ende der Klinke 20 ist durch eine Achse 21 mit dem zweiten Ende 11 des ersten Hebels 3 gelenkig verbunden, dessen anderes Ende in Gestalt eines abgeschrägten Zahnes 22 ausgebildet ist und mit den abgeschrägten Zähnen 19 der Zahnstange 18 zusammenwirkt.

Die Klinke 20 ist zur sicheren Zusammenwirkung mit der Zahnstange 18 mit Hilfe einer Torsionsfeder 23 relativ zu der Zahnstange 18 abgefedert. Die Torsionsfeder 23 wirkt durch das eine Ende mit der Klinke 20, und durch das andere Ende mit dem ersten Hebel 3 zusammen. Zum Lösen der Klinke 20 beim Verstellen ist sie mit einem Handgriff 24 versehen.

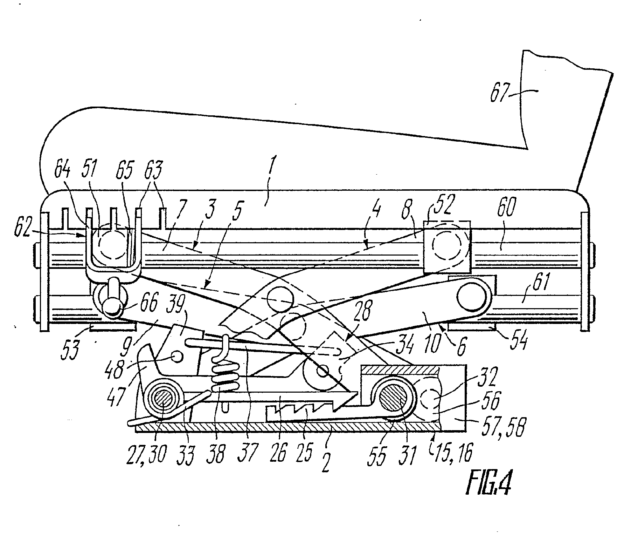

Wird die erfindungsgemäße Sitzverstellungseinheit in Transportmitteln angewendet, die vorwiegend in unwegsamem und stark durchschnittenen Gelände zum Einsatz gelangen, z. B. in Traktoren und anderen Selbstfahrlandmaschinen, ist die Anwendung von Vorrichtungen 15 und 16 zur Höhenverstellung des Sitzes vorzuziehen, von denen jede eine Zahnstange 25 (Fig. 4), eine Klinke 26, die durch das eine Ende mit Hilfe einer Achse 27 am zweiten Rahmen 2 gelenkig angebracht ist und durch das andere Ende mit der Zahnstange 25 zusammenwirkt, sowie ein Verklemmungsglied 28 enthält.

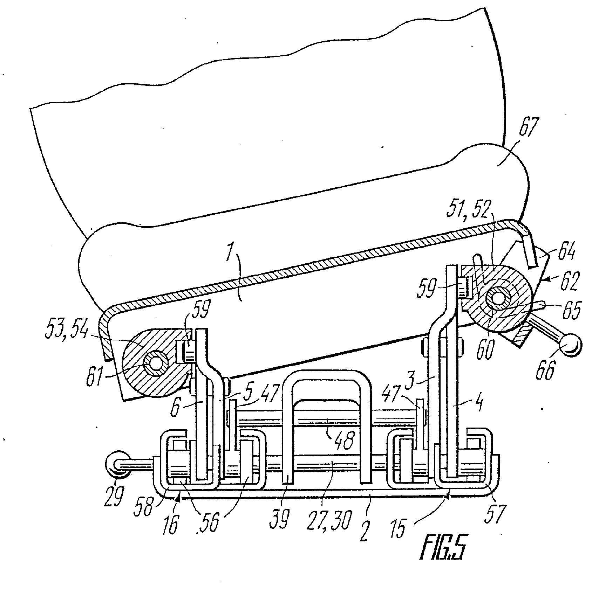

Das Verklemmungsglied 28 wirkt mit der Klinke 26 zusammen und ist über eine kinematische Bindung mit einem Handgriff 29 (Fig. 5) verbunden, der mit Hilfe einer Achse 30 am zweiten Rahmen 2 gelenkig befestigt ist. Der Handgriff 29 dientgemeinsam für die beiden Vorrichtungen 15, 16 zur Höhenverstellung des Sitzes, wobei sich die Klinken 26 der beiden vorerwähnten Vorrichtungen 15, 16 relativ zu seiner Achse 30, die im vorliegenden konkreten Ausführungsbeispiel mit der Achse 27 übereinstimmt, drehen.

Die kinematische Bindung der Vorrichtung 15 (Fig. 4) zur Höhenverstellung des Sitzes mit dem ersten Hebel 3 ist mit Hilfe einer Achse 31 hergestellt, die am zweiten Ende 11 des vorerwähnten Hebels 3 ausgeführt ist. Die kinematische Bindung der Vorrichtung 16 zur Höhenverstellung des Sitzes mit dem ersten Hebel 5 ist mit Hilfe einer Achse 32 hergestellt, die am zweiten Ende 13 des vorerwähnten Hebels 5 ausgeführt ist.

Auf jeder Achse 31, 32 ist eine am zweiten Rahmen 2 verschiebbare Zahnstange 25 gelenkig angebracht.

Zur Gewährleistung einer sicheren Zusammenwirkung der Klinke 26 mit der Zahnstange 25 ist die Klinke 26 relativ zu der letzteren mit Hilfe einer Torsionsfeder 33 abgefedert. Die Torsionsfeder 33 wirkt durch das eine Ende mit der Klinke 26 und durch das andere Ende mit dem zweiten Rahmen 2 zusammen.

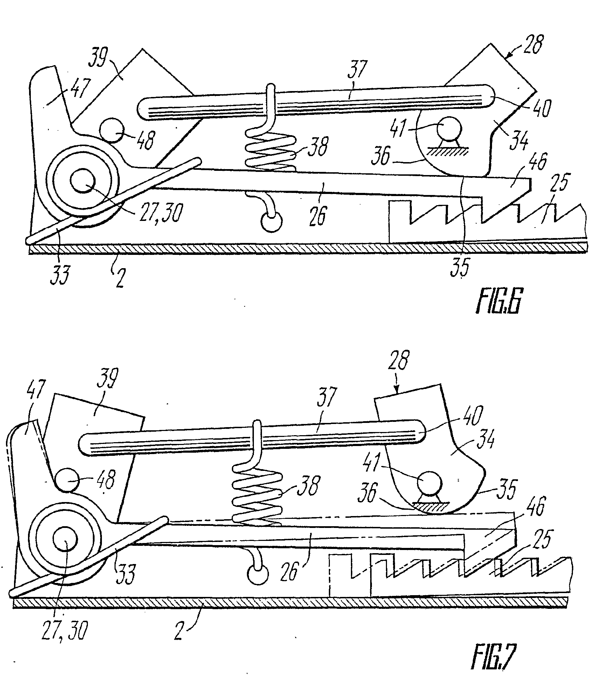

Das Verklemmungsglied 28 kann verschiedene konstruktive Ausführungen haben, z. B. in Gestalt eines Nockens 34 (Fig. 6) ausgebildet werden. Das Arbeitsprofil des Nockens 34 hat zwei Abschnitte: einen geradlinigen Abschnitt 35, der die Feststellung der angedrückten Klinke 26 an der Zahnstange 25 gewährleistet, und einen kurvenförmigen Abschnitt 36, der das Heben der Klinke 26 zur Höhenverstellung des Sitzes gewährleistet. Die beiden Nocken 34 jeder genannten Vorrichtung 15, 16 sind miteinander starr verbunden.

Die kinematische Bindung des Nockens 34 mit dem Handgriff 29 (Fig. 5) wird mittels einer Zugstange 37 (Fig. 6) hergestellt, die relativ zu dem zweiten Rahmen 2 mit Hilfe einer Feder 38 abgefedert ist.

Die Zugstange 37 ist mit dem einen Ende an einem Richtung zu dem jeweiligen zweiten Ende 11, 13 des ersten Hebels 3, 5 hin progressiv zunimmt.

Die jeweiligen zweiten Enden 12, 14 der zweiten Hebel 4, 6 sind am zweiten Rahmen 2 mit Hilfe einer Achse 50 gelenkig angebracht, die im vorliegenden Ausführungsbeispiel mit der Achse 27 (Fig. 4) zusammenfällt, während an den Hebelenden 7, 8, 9, 10, 11, 13 jeweilige Gleitstücke 51 bis 56 angebracht sind. Dabei ist jedes Gleitstück 55, 56 in Gestalt eines Paares von im Abstand voneinander liegenden Rollen ausgebildet, die sich in jeweiligen Führungen 57 und 58 bewegen.

Die Gleitstücke 51 bis 54 (Fig. 1) sind in Gestalt von Buchsen ausgeführt, von denen jede auf einer jeweiligen Achse 59 axial drehbar und längsverschiebbar angebracht ist. Die Achse 59 ist an den jeweiligen Enden 7, 8, 9, 10 der Hebel 3, 4, 5, 6 starr befestigt. Dabei sind die Buchsen an zylindrischen Führungen 60 und 61 angebracht, die am ersten Rahmen 1 starr befestigt sind.

Die Sitzverstellungseinheit eines Fahrzeuges enthält eine Vorrichtung 62 (Fig. 5) zur Verstellung des Sitzes in Längsrichtung, die mit dem ersten Hebel 3 kinematisch verbunden ist. Die Vorrichtung 62 zur Verstellung des Sitzes in Längsrichtung enthält einen Feststeller 63 (Fig. 4) und ein abgefedertes Element 64. Der Feststeller 63 ist am ersten Rahmen 1 angebracht. In der vorliegenden Ausführungsform erfüllen im ersten Rahmen 1 ausgeführte Schlitze die Funktion des Feststellers 63. Das abgefederte Element 64 ist in Gestalt eines Bügels ausgebildet, der um die Buchse 51 herumgelegt und an der zylindrischen Führung 60 so gelenkig angebracht ist, daß er gemeinsam mit der Buchse 51 über dieselbe verschiebbar ist. Das abgefederte Element 64 wirkt mit dem Feststeller 63 kinematisch zusammen. Zum sicheren Eingriff des abgefederten Elementes 64 im Feststeller 63 dient eine Torsionsfeder 65, die durch das eine Ende mit der Buchse 51 und durch das andere Ende mit dem abgefederten Element 64 zusammenwirkt. Zur leichteren Steuerung der Vorrichtung 62 zur Verstellung des Sitzes in Längsrichtung Klinke 20 mit dem Zahn 19 der Zahnstange 18 in Eingriff tritt.

Zur Höhenverstellung des Sitzes ohne Änderung dessen Neigungswinkels erfolgen ähnliche Handgriffe gleichzeitig oder aufeinanderfolgend von beiden Seiten her.

In dem Fall, wenn die Paare der Hebel 3, 4 und 5, 6 durch eine gemeinsame Achse 17 (Fig. 3) miteinander starr verbunden sind, hebt der Fahrer zur Höhenverstellung des Sitzes ohne Änderung dessen Neigungswinkels das Kissen 67 an dessen Rand an, indem er seinen eigenen Körper etwas hochhebt. Die Funktion der Vorrichtung 15 zur Höhenverstellung des Sitzes läuft dabei ähnlich dem oben beschriebenen Fall ab.

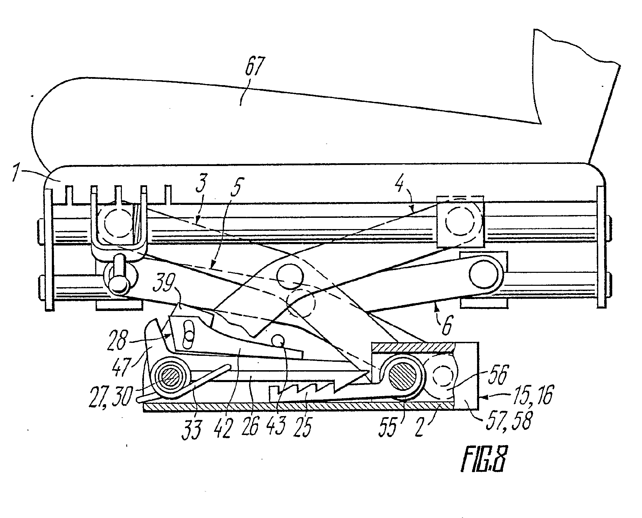

In dem Fall, wenn eine in Form eines Nockens 34 ausgebildete Vorrichtung 15, 16 (Fig. 4) zur Höhenverstellung des Sitzes mit einem Verklemmungsglied 28 angewendet wird, findet die Höhenverstellung des Sitzes wie folgt statt. Im fixierten Zustand drückt die Feder 38 (Fig. 6) über die Zugstange 37 mit dem geradlinigen Abschnitt 35 des Nockens 34 die Klinke 26 an die Zahnstange 25 an. Zur Sitzverstellung dreht der Fahrer den Handgriff 29 (Fig. 5) bis zum Zusammenwirken des Armes 47 (Fig. 7) der Klinke 26 mit dem Anschlag 48. In dieser Stellung wird der Handgriff 29 (Fig. 5) durch die Feder 38 dank der Lage der Zugstange 37 (Fig. 7) am Nocken 34 festgestellt, was dem Fahrer die Möglichkeit gibt, diesen Handgriff 29 (Fig. 5) im weiteren nicht mehr festhalten zu müssen. In dieser Stellung wirken die beiden Nocken 34 mit den entsprechenden Klinken 26 durch ihre kurvenförmigen Abschnitte 36 zusammen, weshalb die Klinken 26 aus dem Eingriff mit den Zahnstangen 25 treten können. Der Fahrer hebt, indem er seinen Körper etwas seitwärts neigt, mit einer Hand den entgegengesetzten Rand des Kissens 67 (Fig. 4). Dabei springt die Klinke 26 (Fig. 7) über die Zahnstange 25 (durch eine punktierte Linie angedeutet), indem sie den Widerstand der Torsionsfeder 33 bis zum Heben des Kissens 67 (Fig. 4) in die erforderliche Höhe überwindet.

Zur Höhenverstellung des Sitzes ohne Änderung des-

- 17 -

sen Neigungswinkels hebt der Fahrzeugführer die beiden Ränder des Kissens 67 an, wobei die beiden Vorrichtungen 15, 16 zur Höhenverstellung des Sitzes im Betrieb sind.

Nach Erzielen der erwünschten Verstellung dreht der Fahrzeugführer den Handgriff 29 (Fig. 5) in seine fixierte Stellung, wobei die Klinke 26 (Fig. 6) durch den Nocken 34 festgeklemmt wird.

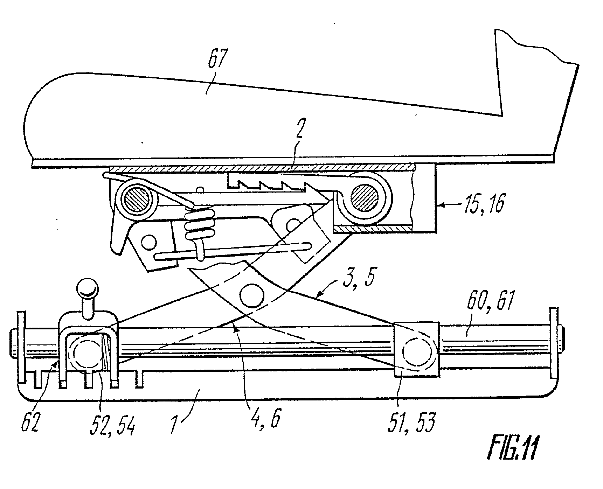

Zum Absenken des Sitzes in die untere Endstellung dreht der Fahrzeugführer den Handgriff 29 (Fig. 5) bis zum Anschlag. Dabei führt der Anschlag 48 (Fig. 12), indem er auf den Arm 47 der Klinke 26 einwirkt und die Spannkraft der Torsionsfeder 33 überwindet, den Arm 46 der Klinke 26 aus dem Eingriff mit der Zahnstange 25 (durch eine punktierte Linie angedeutet). Der Sitz sinkt unter Schwerkrafteinwirkung in die untere Endstellung ab. Nach Erzielen der erwünschten Verstellung dreht der Fahrzeugführer den Handgriff 29 (Fig. 5) in seine fixierte Stellung, wobei die Klinke 26 (Fig. 6) durch den Nocken 34 festgeklemmt wird.

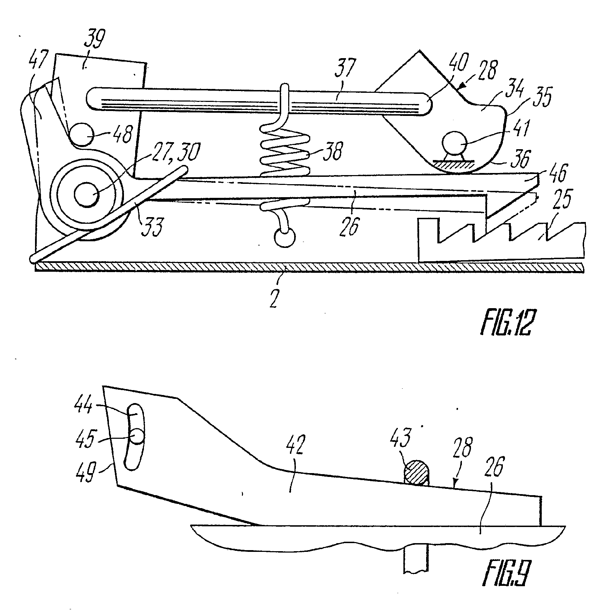

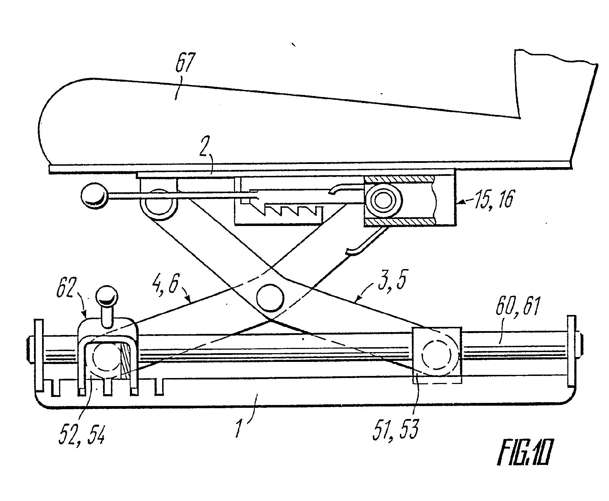

Ist das Verklemmungsglied 28 als ein Keil 42 (Fig. 9) ausgeführt, wird die Drehbewegung des Handgriffes 29 (Fig. 5) auf den Keil 42 über den im Schlitz 44 bewegten Zapfen 45 übertragen. Der Keil 42 führt eine hin- und hergehende Bewegung über die Klinke 26 aus, wobei ihre fixierte Stellung mit Hilfe des Bügels 43 gewährleistet wird. Die Höhenverstellung des Sitzes geschieht ähnlich dem oben beschriebenen Fall.

Zur Verstellung des Sitzes in Längsrichtung bringt der Fahrzeugführer mit Hilfe des Handgriffes 66 (Fig. 5), indem er die Spannkraft der Torsionsfeder 65 überwindet, das abgefederte Element 64 aus dem Eingriff mit dem Feststeller 63 (Fig. 4). Gleichzeitig wird das Kissen 67 in Längsrichtung bewegt. Dabei erfolgt eine gegenseitige Verschiebung der zylindrischen Führungen 60, 61 und der jeweiligen Gleitstücke 51 bis 54 relativ zueinander.

Ist das Kissen 67 am ersten Rahmen 1 angebracht, verschieben sich die zylindrischen Führungen 60, 61 in den jeweiligen Gleitstücken 51 bis 54. Ist das Kissen

- 18 -

67 (Fig. 11) aber am zweiten Rahmen 2 angebracht, verschieben sich die Gleitstücke 51, 52, 53, 54 auf den jeweiligen zylindrischen Führungen 60, 61.

Nach dem Einstellen des Kissens 67 (Fig. 4) in die jeweils erforderliche Stellung senkt der Fahrzeugführer den Handgriff 66 ab, wobei das abgefederte Element 64 unter Einwirkung der Feder 65 mit dem Feststeller 63 in Eingriff tritt, und diese Stellung wird fixiert.

Gewerbliche    Anwendbarkeit

Am vorteilhaftesten    kann die vorliegende Erfindung bei    Sitzen von Traktoren, Selbstfahrlandmaschinen, Lastkraftwagen, Autobussen, Hubstaplern, Straßenbaumaschinen und anderen mobilen Fahrzeugen angewendet werden.

- 19 -

PATENTANSPRÜCHE

1. Sitzverstellungseinheit eines Fahrzeuges, die miteinander paarweise gelenkig verbundene Hebel (3, 4, 5, 6), bei denen die ersten Enden (7, 8, 9, 10) eines jeden Hebelpaares mit einem ersten Rahmen (1) und die zweiten Enden (11, 12, 13, 14) mit einem zweiten Rahmen (2) verbunden sind, an dem eine Vorrichtung (15) zur Höhenverstellung des Sitzes angebracht ist, sowie eine Vorrichtung (62) zur Verstellung des Sitzes in Längsrichtung enthält, dadurch gekennzeichnet, daß die Hebelpaare (3, 4 und 5, 6) parallel liegen und am zweiten Rahmen (2) eine zweite Vorrichtung (16) zur Höhenverstellung des Sitzes angebracht ist, wobei die Vorrichtung (15) zur Höhenverstellung des Sitzes über eine kinematische Bindung mit dem ersten Hebel (3) des ersten Paares, die zweite Vorrichtung (16) zur Höhenverstellung des Sitzes über eine kinematische Bindung mit dem ersten Hebel (5) des zweiten Hebelpaares verbunden ist, und die Vorrichtung (62) zur Verstellung des Sitzes in Längsrichtung am ersten Rahmen (1) angebracht und über eine kinematische Bindung mit dem ersten Hebel (3; 5) eines der Hebelpaare verbunden ist.

2. Sitzverstellungseinheit eines Fahrzeuges, die miteinander paarweise gelenkig verbundene Hebel (3, 4, 5, 6), bei denen die ersten Enden (7, 8, 9, 10) eines jeden Hebelpaares mit dem ersten Rahmen (1) und die zweiten Enden (11, 12, 13, 14) mit dem zweiten Rahmen (2) verbunden sind, an dem eine Vorrichtung (15) zur Höhenverstellung des Sitzes angebracht ist, sowie eine Vorrichtung (62) zur Verstellung des Sitzes in Längsrichtung enthält, dadurch gekennzeichnet, daß die Hebelpaare (3, 4, 5, 6) parallel liegen und miteinander starr verbunden sind, wobei die Vorrichtung (15) zur Höhenverstellung des Sitzes über eine kinematische Bindung mit dem ersten Hebel (3) des ersten Hebelpaares verbunden ist, mit dem über eine weitere kinematische Bindung die am ersten Rahmen (1) angebrachte Vorrichtung (62) zur

- 20 -

Verstellung des Sitzes in Längsrichtung verbunden ist.

3. Sitzverstellungseinheit nach Anspruch 1 oder 2, d a d u r c h   g e k e n n z e i c h n e t, daß die Vorrichtung (15,16) zur Höhenverstellung des Sitzes eine am Rahmen (2) angebrachte Zahnstange (18) darstellt, wobei ihre kinematische Bindung mit dem ersten Hebel (3, 5) mittels einer Klinke (20) hergestellt ist, bei der das eine Ende mit dem zweiten Ende (11, 13) des ersten Hebels (3, 5) gelenkig verbunden ist, und     das andere Ende mit der Zahnstange (18) zusammenwirkt.

4. Sitzverstellungseinheit nach Anspruch 3, d a - d u r c h   g e k e n n z e i c h n e t , daß die Klinke (20) relativ zu der Zahnstange (18) mit Hilfe einer Torsionsfeder (23) abgefedert ist, die über     ein Ende mit der Klinke (20) und über das andere Ende     mit dem ersten Hebel (3, 5) zusammenwirkt.

5. Sitzverstellungseinheit nach Anspruch 1 oder  2, d a d u r c h   g e k e n n z e i c h n e t , daß die Vorrichtung (15, 16) zur Höhenverstellung des Sitzes eine Zahnstange (25), eine mit ihrem einen Ende am zweiten Rahmen (2) gelenkig angebrachte Klinke (26), die über ihr anderes Ende mit der Zahnstange (25) zusammenwirkt, sowie ein Verklemmungsglied (28) enthält, das mit der Klinke (26) zusammenwirkt und über eine kinematische Bindung mit einem am zweiten Rahmen (2) gelenkig befestigten Handgriff (29) verbunden ist,     und     die kinematische Bindung der Vorrichtung (15, 16) zur Höhenverstellung des Sitzes mit dem ersten Hebel (3, 5) mit Hilfe einer am zweiten Ende (11, 13) des ersten Hebels (3, 5) ausgeführten Achse (31, 32) hergestellt ist, auf der die am zweiten Rahmen (2) verschiebbare Zahnstange (25) angebracht ist.

6. Sitzverstellungseinheit nach Anspruch 5, d a - d u r c h   g e k e n n z e i c h n e t , daß die Klinke (26) relativ zu der Zahnstange (25) mit Hilfe einer Torsionsfeder (33) abgefedert ist, die über das eine Ende mit der Klinke (26) und über ihr anderes Ende     mit dem zweiten Rahmen (2) zusammenwirkt.

7. Sitzverstellungseinheit nach Anspruch 5, d a -

- 21 -

durch gekennzeichnet, daß die Klinke (26) in Gestalt eines zweiarmigen Hebels ausgebildet ist, bei dem der eine Arm (47) mit einem mit dem Handgriff (29) starr verbundenen Anschlag (48) und der andere Arm (46) mit einem in Gestalt eines Nockens (34) ausgebildeten Verklemmungsglied (28) zusammenwirkt, dessen kinematische Bindung mit dem Handgriff (29) mit Hilfe einer relativ zu dem zweiten Rahmen (2) abgefederten Zugstange (37) hergestellt ist.

8. Sitzverstellungseinheit nach Anspruch 5, d a - d u r c h   g e k e n n z e i c h n e t , daß die Klinke (26) in Gestalt eines zweiarmigen Hebels ausgebildet ist, bei dem der eine Arm (47) mit dem mit dem Handgriff (29) starr verbundenen Anschlag (48) und der andere Arm (46) mit dem Verklemmungsglied (28) zusammenwirkt, das in Gestalt eines derartig angeordneten Keiles (42) ausgebildet ist, daß er mit der Klinke (26) und mit dem zweiten Rahmen (2) zusammenwirken kann, wobei die kinematische Bindung des Keiles (42) mit dem Handgriff (29) mit Hilfe eines im Körper des Keiles (42) ausgeführten Schlit-
(44)                                   (44)
zes/und eines in diesem Schlitz/bewegbar angebrachten Zapfens (45) hergestellt ist, der mit seinem einen Ende am Handgriff (29) starr befestigt ist.

9. Sitzverstellungseinheit nach Anspruch 3 oder 5, d a d u r c h   g e k e n n z e i c h n e t , daß die Zähne (19) der Zahnstange (13, 25) mit einer Teilung ausgeführt sind, die in Richtung zum zweiten Ende (11, 13) des ersten Hebels ( 3, 5) hin progressiv zunimmt.

10. Sitzverstellungseinheit nach Anspruch 1 oder 2, d a d u r c h   g e k e n n z e i c h n e t , daß das zweite Ende (12, 14) jedes zweiten Hebels (4, 6) am zweiten Rahmen (2) gelenkig angebracht ist, und an den anderen Enden (7, 8, 9, 10, 11, 13) sämtlicher Hebel (3, 4, 5, 6) Gleitstücke (51, 52, 53, 54, 55, 56) an den jeweiligen Rahmen (1, 2) längsverschiebbar angebracht sind.

11. Sitzverstellungseinheit nach Anspruch 10, d a - d u r c h   g e k e n n z e i c h n e t , daß die an den zweiten Enden (11, 13) der ersten Hebel (3, 5) ange-

- 6 -

Diese technische Lösung ist hauptsächlich zur Anwendung bei Sitzen von Lastkraftwagen, Autobussen, Hubstaplern und anderen mobilen Fahrzeugen vorgesehen, die vorwiegend in flachem Gelände zum Einsatz gelangen.

Vorteilhafterweise stellt die Vorrichtung zur Höhenverstellung des Sitzes eine am zweiten Rahmen angebrachte Zahnstange dar, wobei ihre kinematische Bindung mit dem ersten Hebel mittels einer Klinke hergestellt wird, bei der das eine Ende mit dem zweiten Ende des ersten Hebels gelenkig verbunden ist und das andere Ende mit der Zahnstange zusammenwirkt.

Durch diese konstruktive Lösung wird die Sitzverstellung vereinfacht, und diese kann während der Bewegung des Fahrzeuges vorgenommen werden.

Vorzugsweise wird die Klinke relativ zu der Zahnstange mit Hilfe einer Torsionsfeder abgefedert, die durch das eine Ende mit der Klinke und durch das andere Ende mit dem ersten Hebel zusammenwirkt.

Dies gewährleistet eine zuverlässige Zusammenwirkung der Klinke mit der Zahnstange durch Beseitigung der zwischen ihnen vorhandenen Spielräume.

Vorteilhafterweise enthält die Vorrichtung zur Höhenverstellung des Sitzes eine Zahnstange, eine Klinke, die mit dem einen Ende am zweiten Rahmen gelenkig angebracht ist und durch das andere Ende mit der Zahnstange zusammenwirkt, sowie ein Verklemmungsglied, das mit der Klinke zusammenwirkt und über eine kinematische Bindung mit einem am zweiten Rahmen gelenkig befestigten Handgriff verbunden ist, wobei die kinematische Bindung der Vorrichtung zur Höhenverstellung des Sitzes mit dem ersten Hebel mittels einer am zweiten Ende des ersten Hebels ausgeführten Achse hergestellt wird, an der eine am zweiten Rahmen verschiebbare Zahnstange gelenkig angebracht ist.

Durch diese konstruktive Ausführung wird die Sitzverstellung vereinfacht, und diese kann während der Bewegung des Fahrzeuges vorgenommen werden. Die Anwendung eines Verklemmungsgliedes erlaubt es, ein ungewolltes Lösen der Klinke von der Zahnstange bei während der Bewegung des Fahrzeuges entstehenden Vibrationen zu verhindern.

Vorzugsweise wird die Klinke relativ zu der Zahnstange mit Hilfe einer Torsionsfeder abgefedert die durch das eine Ende mit der Klinke und durch das andere Ende mit dem zweiten Rahmen zusammenwirkt.

Dies gewährleistet eine zuverlässige Zusammenwirkung der Klinke mit der Zahnstange durch Beseitigung der vorhandenen Spielräume.

Vorteilhafterweise wird die Klinke in Gestalt eines zweiarmigen Hebels ausgebildet, bei dem der eine Arm mit einem mit dem Handgriff starr verbundenen Anschlag und der andere Arm mit einem Verklemmungsglied zusammenwirkt, das in Form eines Nockens ausgebildet ist, dessen kinematische Bindung mit dem Handgriff mittels einer relativ zu dem zweiten Rahmen abgefederten Zugstange hergestellt wird.

Diese technische Lösung gestattet es, die Verstellung des Sitzes in der Höhe während der Bewegung des Fahrzeuges zu vereinfachen und dank des Zusammenwirkens der Klinke mit dem Anschlag mit Hilfe des vorhandenen Handgriffes das Lösen der Vorrichtung zur Höhenverstellung des Sitzes bei ihrer Verstellung in die untere Endlage zu gewährleisten.

Die Klinke kann in Gestalt eines zweiarmigen Hebels ausgebildet werden, bei dem der eine Arm mit dem mit dem erwähnten Handgriff starr verbundenen Anschlag und der andere Arm mit einem Verklemmungsglied zusammenwirkt, das in Gestalt eines so angebrachten Keiles ausgebildet ist, daß er mit der Klinke und mit dem zweiten Rahmen zusammenwirken kann, wobei die kinematische Bindung desselben mit dem Handgriff mittels eines im Keilkörper vorgesehenen Schlitzes und eines in diesem beweglich angebrachten Zapfens hergestellt wird, der mit dem einen Ende am Handgriff starr befestigt ist.

Diese konstruktive Ausführung des Verklemmungsgliedes gestattet es, die Zahl der beweglichen Teile und Gelenke zu vermindern.

Vorteilhafterweise werden die Zähne der Zahnstange mit einer Teilung ausgeführt, die in Richtung zu dem zweiten Ende des ersten Hebels hin progressiv zunimmt.

Dadurch wird die Höhenverstellung des Sitzes in gleichmäßigen Intervallen gewährleistet.

Zur Gewährleistung der Sitzverstellungen in der Höhe und in Längsrichtung muß das zweite Ende jedes zweiten Hebels am zweiten Rahmen gelenkig angebracht werden, und an allen übrigen Enden sämtlicher Hebel müssen Gleitstücke angebracht werden, die über die jeweiligen Rahmen hin längsverschiebbar sind.

Zur Reduzierung der Reibung beim Verschieben der ersten Hebel über den zweiten Rahmen ist es vorteilhaft, daß die an den zweiten Enden der ersten Hebel angebrachten Gleitstücke als Rollen ausgeführt werden.

Vorzugsweise werden die an den ersten Enden sämtlicher Hebel angebrachten Gleitstücke in Gestalt von Buchsen ausgebildet, von denen jede auf einer an den erwähnten Enden starr befestigten Achse axial drehbar und längsverschiebbar angebracht ist, wobei die Buchsen auf an dem ersten Rahmen starr befestigten zylindrischen Führungen angebracht sind.

Diese konstruktive Lösung gestattet es, die Vorrichtung zur Verstellung des Sitzes in Längsrichtung mit sämtlichen Hebeln zu verbinden und sämtliche Sitzverstellungen mit Hilfe derselben zylindrischen Führungen vorzunehmen.

Vorzugsweise enthält die Vorrichtung zur Verstellung des Sitzes in Längsrichtung einen am ersten Rahmen angebrachten Feststeller und ein mit ihm kinematisch verbundenes abgefedertes Element, das mit einer am ersten Hebel angebrachten Buchse gelenkig verbunden ist.

Diese konstruktive Lösung ermöglicht eine wesentliche Vereinfachung der Vorrichtung zur Verstellung des Sitzes in Längsrichtung dank Anwendung einer zylindrischen Führung als einer gemeinsamen Achse für das Anbringen von Einzelteilen dieser Sitzverstellungsvorrichtung.

Die erfindungsgemäße Sitzverstellungseinheit eines Fahrzeuges stellt eine in einem Block montierte Sitzverstellungseinheit für die Durchführung von Sitzverstellungen in der Höhe, in Längsrichtung sowie bei Bedarf in der Neigungswinkelebene dar. Diese Ausführung ermöglicht die Anwendung dieser Einheit sowohl in abgefederten Sitzen, wobei sie zwischen dem Sitzkissen und der Aufhängung angeordnet wird, als auch in nicht abgefederten Sitzen, wobei sie zwischen dem Sitzkissen und dem Karosserieboden eines Fahrzeuges angeordnet wird, was beispielsweise in langsam fahrenden Fahrzeugen der Fall ist. In diesem Fall hat der nicht abgefederte Sitz ebenfalls sämtliche erforderliche Sitzverstellungsmöglichkeiten.

Dabei kann die erfindungsgemäße Sitzverstellungseinheit sowohl durch den ersten, als auch durch den zweiten Rahmen mit dem Sitzkissen verbunden werden. Bei Bedarf kann zwischen der Verstellungseinheit und anderen Bestandteilen des Sitzes eine Umsteuervorrichtung bzw. eine Vorrichtung zum Drehen des Sitzes um die vertikale Achse montiert werden.

Außerdem kann eine derartige Ausführung der Sitzverstellungseinheit vom Sitz getrennt hergestellt werden und beide können dann mühelos zu einer Baugruppe zusammengebaut werden. Die erfindungsgemäße Sitzverstellungseinheit kann ferner zur Befestigung von beliebigen anderen Objekten angewendet werden, die in Höhe, Längsrichtung und bei Bedarf in der Neigungswinkelebene verstellt werden müssen.

Nachstehend wird ein konkretes Ausführungsbeispiel der Erfindung unter Bezugnahme auf Zeichnungen beschrieben. Es zeigt:

Fig. 1 - eine erfindungsgemäße Sitzverstellungseinheit eines Fahrzeuges in Vorderansicht;

Fig. 2 - dieselbe in Seitenansicht;

Fig. 3 - eine Ausführungsform der erfindungsgemäßen Sitzverstellungseinheit eines Fahrzeuges ohne Verstellung nach dem Neigungswinkel in Vorderansicht;

Fig. 4 - eine erfindungsgemäße Sitzverstellungseinheit eines Fahrzeuges mit einem in Form eines Nockens ausgebildeten Verklemmungsglied in Seitenansicht;

Fig. 5 - dieselbe in Vorderansicht;

Fig. 6, 7, 12 - verschiedene Stellungen des in Form eines Nockens ausgebildeten Verklemmungsgliedes relativ zu der Klinke;

Fig. 8 - eine erfindungsgemäße Sitzverstelleinheit eines Fahrzeuges mit einem in Form eines Keiles ausgebildeten Verklemmungsglied in Seitensansicht;

Fig. 9 - ein Verklemmungsglied in Form eines Keiles in vergrößertem Maßstab;

Fig. 10, 11 - Anordnungsvarianten des Sitzkissens auf der Sitzverstellungseinheit eines Fahrzeuges bei einer beliebigen Ausführungsform der Vorrichtung zur Höhenverstellung des Sitzes gemäß der Erfindung.

Die Sitzverstellungseinheit eines Fahrzeuges enthält einen ersten Rahmen 1 (Fig. 1) und einen zweiten Rahmen 2, die mittels Hebeln 3, 4, 5, 6 miteinander verbunden sind, die auch untereinander gelenkig verbunden sind, wobei das erste Paar von Hebeln 3 und 4 parallel zum zweiten Paar von Hebeln 5 und 6 liegt. Die einen Enden 7, 8, 9, 10 (Fig. 2) der jeweiligen Hebel 3, 4, 5 und 6 sind mit dem ersten Rahmen 1/ und die zweiten Enden 11, 12, 13 und 14 mit dem zweiten Rahmen 2 verbunden.

Am zweiten Rahmen 2 ist eine Vorrichtung 15 zur Höhenverstellung des Sitzes angebracht, die über eine kinematische Bindung mit dem ersten Hebel 3 des ersten Hebelpaares verbunden ist.

In dem Fall, wenn die erfindungsgemäße Sitzverstellungseinheit in ein Transportmittel eingebaut ist, das vorwiegend auf Abhängen zum Einsatz gelangt, d. h. wenn eine Regelung des Neigungswinkels des Sitzes erforderlich wird, wird am zweiten Rahmen 2 eine zweite Vorrichtung 16 (Fig. 1) zur Höhenverstellung des Sitzes angebracht. Die zweite Vorrichtung 16 zur Höhenverstellung des Sitzes ist über eine kinematische Bindung mit dem ersten Hebel 5 des zweiten Hebelpaares verbunden.

Wird die erfindungsgemäße Sitzverstellungseinheit in ein Transportmittel eingebaut, wo keine Regelung des Neigungswinkels des Sitzes erforderlich ist, so ist dann Bügel 39 befestigt, der auf der Achse 30 des Handgriffes 29 (Fig. 5) starr angebracht ist. Mit ihrem anderen Ende ist die Zugstange 37 (Fig. 6) am Nocken 34 so befestigt, daß zwei fixierte Stellungen des Handgriffes 29 (Fig. 5) gewährleistet werden. Dies wird dadurch erreicht, daß eine Achse 40 (Fig. 6) für die Befestigung der Zugstange 37 am Nocken 34 entweder auf der einen Seite der durch eine Achse 41 für die Befestigung des Nockens 34 am zweiten Rahmen 2 verlaufende vertikale Ebene, oder aber, wie dies in Fig. 7 gezeigt ist, auf der anderen Seite dieser vertikalen Ebene liegt.

Das Verklemmungsglied 28 (Fig. 8) kann in Gestalt eines Keiles 42 ausgebildet werden, der so angeordnet ist, daß er mit dem zweiten Rahmen 2 über einen Bügel 43 (Fig. 9) zusammenwirken kann.

Die kinematische Bindung des Keiles 42 mit dem Handgriff 29 (Fig. 5) wird mit Hilfe eines im Körper des Keiles 42 ausgeführten Schlitzes 44 (Fig. 9) und eines in diesem beweglich angebrachten Zapfens 45 hergestellt, der mit einem seiner Enden am Bügel 39 (Fig. 8) des Handgriffes 29 (Fig. 5) starr befestigt ist.

Bei jeder beliebigen vorstehend beschriebenen konstruktiven Ausführung des Verklemmungsgliedes 28 wird die Klinke 26 in Gestalt eines zweiarmigen Hebels ausgebildet. Der eine Arm 46 (Fig. 6) dieses Hebels wirkt mit dem Nocken 34 bzw. mit dem Keil 42 (Fig. 9) und mit der Zahnstange 25 (Fig. 6) zusammen. Der andere Arm 47 wirkt mit dem Handgriff 29 (Fig. 5) zusammen.

In dem Fall, wenn der Nocken 34 (Fig. 6) angewendet wird, erfolgt das Zusammenwirken über einen am Bügel 39 starr angebrachten Anschlag 48. Wird aber der Keil 42 (Fig. 9) verwendet, so wirkt der Arm 47 (Fig. 8) mit dem Handgriff 29 (Fig. 5) über einen Anschlag 49 (Fig. 9) zusammen, der von der Stirnfläche des Keiles 42 gebildet ist.

Zur Gewährleistung der Höhenverstellung des Sitzes in gleichmäßigen Intervallen sind die Zähne 19 (Fig. 2) der Zahnstange 13 mit einer Teilung ausgeführt, die in wird ein Handgriff 66 vorgesehen, der mit dem abgefederten Element 64 starr verbunden ist.

Die konstruktiven Besonderheiten der erfindungsgemäßen Sitzverstellungseinheit eines Fahrzeuges erlauben es, verschiedene Einbauvarianten beim Einbau in das Fahrzeug zu realisieren.So sind in Fig. 2 und 4 Befestigungsvarianten des zweiten Rahmens 2 an der Aufhängung des abgefederten Sitzes oder unmittelbar auf dem Karosserieboden eines Fahrzeuges, und eines Kissens 67 am ersten Rahmen 1 bei jeder beliebigen,im vorstehenden beschriebenen Ausführungsform der Vorrichtung 15, 16 zur Höhenverstellung des Sitzes dargestellt. In Fig. 10 und 11 sind Befestigungsvarianten des ersten Rahmens 1 an der Aufhängung des abgefederten Sitzes oder unmittelbar auf dem Karosserieboden, und des Kissens 67 am zweiten Rahmen 2 dargestellt.

Die erfindungsgemäß vorgeschlagene Sitzverstellungseinheit eines Fahrzeuges funktioniert wie folgt.

Zur Änderung des Neigungswinkels des Sitzes in der Querebene hebt der Fahrzeugführer, indem er seinen Körper etwas seitwärts neigt, mit einer Hand den entgegengesetzten Rand des Kissens 67 (Fig. 2), das mit dem ersten Rahmen 1 starr verbunden ist.

Dabei beginnen die paarweise angebrachten Hebel 3, 4 und 5, 6 sich zu heben, und der abgeschrägte Zahn 22 der Klinke 20 beginnt über die Zähne 19 der Zahnstange 18 zu springen, wobei er den Widerstand der Torsionsfeder 23 bis zum Heben des Kissens 67 in die erforderliche Höhe überwindet.

Zum Ausgleich der Sitzlage in der Querebene bringt der Fahrer mit Hilfe des auf der Seite des angehobenen Randes des Kissens 67 liegenden Handgriffes 24 die Klinke 20 aus dem Eingriff mit der Zahnstange 18 und dreht dann das Kissen 67 in der Querebene durch ein Neigen seines Körpers in Richtung zu dem gedrückten Handgriff 24 hin,bis die erwünschte Kissenstellung erzielt wird, wonach diese festgestellt wird, indem der Fahrer den Handgriff 24 losläßt, wobei der abgeschrägte Zahn 22 der

- 22 -

brachten Gleitstücke (55, 56) in Form von Rollen ausgebildet sind.

12. Sitzverstellungseinheit nach Anspruch 10, d a -
d u r c h    g e k e n n z e i c h n e t , daß die an den
ersten Enden (7, 8, 9, 10) sämtlicher Hebel (3, 4, 5, 6)
angebrachten Gleitstücke (51, 52, 53, 54) in Gestalt von
Buchsen ausgebildet sind, von denen jede auf einer an den
erwähnten Enden (7, 8, 9, 10) starr befestigten Achse (59)
axial drehbar und längsverschiebbar angebracht ist, wobei
die Buchsen auf an dem ersten Rahmen (1) starr befestigten
zylindrischen Führungen (60, 61) angebracht sind.

13. Sitzverstellungseinheit nach Anspruch 12, d a -
d u r c h    g e k e n n z e i c h n e t , daß die Vorrichtung (62) zur Verstellung des Sitzes in Längsrichtung
einen am ersten Rahmen (1) angebrachten Feststeller (63)
und ein mit ihm kinematisch verbundenes abgefedertes Element (64) enthält, das mit einer am ersten Hebel (3) angebrachten Buchse (51) gelenkig verbunden ist.

FIG.1

FIG.2

FIG.3

FIG.4

FIG.5

FIG.6

FIG.7

FIG.8

FIG.12

FIG.9

FIG.10

FIG.11

# INTERNATIONAL SEARCH REPORT

International Application No PCT/SU 88/00151

## I. CLASSIFICATION OF SUBJECT MATTER (If several classification symbols apply, indicate all)

According to International Patent Classification (IPC) or to both National Classification and IPC

Int. Cl.$^4$  B 60 N 1/06, 1/08

## II. FIELDS SEARCHED

Minimum Documentation Searched [7]

| Classification System | Classification Symbols |
|---|---|
| Int. Cl.$^4$ | B 60 N 1/00, 1/02, 1/06, 1/08 |

Documentation Searched other than Minimum Documentation
to the Extent that such Documents are included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | FR, A1, 2002697 (FIRMA BREMSHEY & CO.), 31 October 1969 (31.10.69), see the claims, figures 1-3 (cited in the description) | 1,2 |
| A | SU, A1, 831642 (PROIZVODSTVENNOE OBIEDINENIE "MINSKY TRAKTORNY ZAVOD" IM. V.I. LENINA) 28 May 1981 (28.05.81), see the claims, figures 1,2 (cited in the description) | 1,2 |
| A | GB, B, 1356864 (BREMSHEY AKTIENGESELLSCHAFT), 19 June 1974 (19.06.74) | 1,2 |
| A | US, A, 3475054 (HYLAND C. FLINT), 28 October 1969, (28.10.69) | 1,2 |
| A | DE, A1, 3534378 (TACHIKAWA SPRING CO., LTD) 7 May 1986 (07.05.86) & GB, A, 2167113, 21.05.86 FR, A1, 2571003, 04.04.86 US, A, 4650148, 17.03.87 | |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| 22 March 1989 (22.03.89) | 19 April 1989 (19.04.89) |
| International Searching Authority | Signature of Authorized Officer |
| ISA/SU | |

Form PCT/ISA/210 (second sheet) (January 1985)